# EUROPEAN PATENT SPECIFICATION

(11) **EP 2 315 807 B1**
(45) Date of publication and mention of the grant of the patent: **30.05.2012**
(21) Application number: 09791522.7
(22) Date of filing: 14.08.2009
(51) Int. Cl.: C08L 67/00

(54) **POLYOL COMPOSITIONS**
POLYOLZUSAMMENSETZUNGEN
COMPOSITIONS DE POLYOL

(30) Priority: 20.08.2008 US 90283 P
(43) Date of publication of application: 04.05.2011
(73) Proprietor: Rhein Chemie Corporation, Chardon, OH 44024 (US); McAfee, Elwin R., Blythewood, SC 29016 (US)
(72) Inventor: MCAFEE, Elwin, R., Blythewood, SC 29016 (US)
(74) Representative: Siegers, Britta
(86) International application number: PCT/US2009/053829
(87) International publication number: WO 2010/021920

(56) References cited:
- EP-A- 1 162 222
- WO-A-00/29459
- WO-A-99/51430
- DE-A1-102005 011 572
- US-A1- 2005 282 017
- US-A1- 2006 036 007
- US-A1- 2006 258 762
- US-A1- 2007 129 452
- US-A1- 2007 166 344
- DATABASE WPI Week 199332 Thomson Scientific, London, GB; AN 1993-252794 XP002549487 & JP 05 170862 A (TEIJIN LTD) 9 July 1993 (1993-07-09)

## Description

### BACKGROUND OF THE INVENTION

The present invention relates generally to polyester polyol compositions stabilized against hydrolysis and having a reduced acid number, as well as compositions comprising sterically hindered aromatic carbodiimides useful for acid number reduction of polyester polyols as well as for the stabilization thereof against hydrolysis, to the processes of making such compositions, and to the process for stabilizing against hydrolysis and/or reducing the acid number of polyester polyol compositions, and to the above wherein the polyols are bio-based polyester polyols such as soybean or castor oil based polyols.

Broadly, as is know to one skilled in the art, polyurethane compositions may be formed from the reaction of polyisocyanates and polyols (the -N=C=O/ - OH reaction). Many types of polyol compounds may be used in the formation of polyurethanes and may be, generally, either polyester or polyether polyols. Polyester based polyols may be used in the production of polyurethane foams useful to, among others, the construction, building, and automotive industries.

Conventionally, polyester polyols are derived from petroleum sources. However, environmental concerns have made the use of natural renewable sources for polyols of greater importance. Presently, bio-based polyols can be derived from vegetable oils and, subsequently, used in the production of polyurethanes. Two important bio-based sources are soybean oil and castor oil. Significant ecological savings may be achieved via the use of bio-based polyols as compared to the use of petroleum based polyols. Bio-based polyols have found use in, *inter alia,* the manufacture and production of polyurethane foams, including rigid and flexible polyurethane foams.

Various methods for the production of bio-based polyols have been heretofore performed. By way of example reference is made to U.S. Patent Numbers 6476,244, 6,759,542, 6,686,435, 6,258,869, and 5,482,980, and U.S. Patent Application Pub. Number 2007/0265459. Generally, for the production of polyester polyols condensation polymerization is employed, wherein carboxyl and hydroxyl groups are reacted. Since most renewable feed stocks lack hydroxyl groups, such as soybean oil, the introduction of hydroxyl groups necessitates a pre-polymerization step to first introduce the hydroxyl group. For example, the introduction may be carried out by treatment with peroxy acids to form epoxides followed by reaction with nucleophiles thereby forming the hydroxyl groups. Reference is made for example to U.S. Patent Application Publication Number 2007/0265459 regarding the production of soy-based polyols.

One problem associated with bio-based polyol compositions, such as soy based polyols, is the high acid number of such compositions as compared with more conventional petroleum based polyols. The acid number generally being the measure of the amount of carboxylic acid groups in the chemical compound, such as a fatty acid. Furthermore, hydrolytic degradation or breakdown of polyester containing products, for example those produced by polycondensation reactions and/or containing products of polycondensation reactions, such as polyester polyols by water and acids may occur and reduce the useful life span of such materials. As is generally understood the hydrolytic degradation of a polyester containing material is essential the reverse of a condensation reaction and involves the cleavage of an ester group by water and acid to form a carboxylic acid and an alcohol as represented by the following reaction:

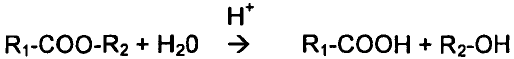

Once such a process begins it continues and even accelerates autocatalytically resulting in a substantial break down in the polyester polyol. As should be appreciated, hydrolysis of the polyester substantially impairs the usability and life span of the polyester containing polyol composition. The acid number reduction and stabilization against hydrolysis of polyester containing polyols is therefore of great importance.

Heretofore various compositions and methods have been attempted to reduce hydrolytic cleavage of polyester containing materials. By way of reference, employment of (poly)carbodiimide compounds as hydrolysis stabilizers are discussed in U.S. Patent Numbers: 3,193,523; 5,434,305; 5,130,360; 6,498,225; 5,210,170; and 6,602,926 and U.S. Application Pub. Number 2007/0066727.

Carbodiimide hydrolysis stabilization results, generally, from its reactions with water to form urea and with free carboxyl groups to form acyl ureas as shown by the following reactions, respectively:

R₁-N=C=N-R₂ + H2O → R₁-NH-C=O-NH-R₂

R₁-N=C=N-R₂ + R₃-COOH → R₁-NH-C=O-NR₂-C=O-R₃

However, various problems exist with the use of carbodiimides as stabilization additives that reduces the overall stabilization effectiveness. For example, reactions between carbodiimides themselves are known to occur, similarly, side reactions with isocyanates during the production of polyurethanes may occur, and there is a tendency for carbodiimides to migrate out of polycondensation products. Furthermore, improper processing may impact industrial hygiene.

Other compounds known broadly as moisture scavengers capable of reacting with water in polyurethane systems to thereby remove the same have been used in polyurethane coating systems. For example, U.S. Patent Number 5,264,148 discloses the use of oxazolidines as water scavengers in moisture-curing polyurethane coating systems, wherein these oxazolidines react with water to form secondary amino alcohols and ketones.

Catalytic imidazole compounds have also been used for the catalysis of polyurethane reactions, including imidazoles such as 1-methylimidazole. Such catalysts have been used especially in the production of polyurethane rigid foams.

In view of the above, it should be appreciated that the need for a bio-based polyester polyol composition having a reduced acid number and stabilized against hydrolysis remains.

### BRIEF SUMMARY OF THE INVENTION

Surprisingly, it has now been found that the novel formulations and compositions of the present invention reduce the acid number of a bio-based polyester polyol composition and provide hydrolytic stabilization against hydrolysis, thereby increasing the usability and life span of the bio-based polyester polyol compositions according to the invention. Furthermore it has been found that such formulation may provide synergistic effect.

There is broadly contemplated, in accordance with at least one presently preferred embodiment of the invention, a bio-based polyol composition having a reduced acid number and being effectively stabilized against hydrolysis comprising: a) a bio-based polyol having ester linkages, b) a carbodiimide according to formula (I)

R₁-N=C=N-R₂ (I)

in which R₁ and R-₂ independent of one another are optionally substituted alkyl, cycloalkyl, or aryl groups, and c) at least one of an oxazolidine.

Furthermore, there is contemplated the composition above, wherein the bio-based polyol is a soy-based polyol and/or a castor oil based polyol. Moreover, in accordance with an embodiment of the invention the carbodiimide may be a sterically hindered carbodiimide, including 2,2',6,6'-tetraisopropyldiphenyl carbodiimide. In addition, there is contemplated the composition above wherein the oxazolidine is 3-ethyl-2-methyl-2-(3-methylbutyl)-1-3-oxazolidine .

In another embodiment of the present invention there is a process for the reduction of the acid number of a bio-based polyester polyol, comprising the steps of: providing a bio-based polyol having ester linkages and mixing the bio-based polyol with a carbodiimide according to formula (I)

R₁-N=C=N-R₂ (I)

in which R₁ and R₂ independent of one another are optionally substituted alkyl, cycloalkyl, or aryl groups and at least one of an oxazolidine.

In a further embodiment of the present invention there is contemplated a polyurethane formed by the reaction of a bio-based polyester containing polyol and an isocyanate (the -N=C=O / -OH reaction), wherein said bio-based polyester polyol has been treated with a carbodiimide according to formula (I)

R₁-N=C=N-R₂ (I)

in which R₁ and R₂ independent of one another are optionally substituted alkyl, cycloalkyl, or aryl groups and at least one of an oxazolidine to thereby reduce the acid number and/or provide hydrolysis stabilization, whereby the bio-based polyester polyol has a reduced acid number and is stabilized against hydrolytic cleavage of the ester bonds.

In a further embodiment of the present invention there is contemplated an article, such as a polyurethane foam, formed from a polyurethane formed by the reaction of an isocyanate and a bio-based polyester polyol, said polyol being treated by mixing with a carbodiimide according to formula (I)

R₁-N=C=N-R₂ (I)

in which R₁ and R₂ independent of one another are optionally substituted alkyl, cycloalkyl, or aryl groups and at least one of an oxazolidine to thereby reduce the acid number and/or provide hydrolysis stabilization.

For a better understanding of the present invention, together with other and further features and advantages thereof, reference is made to the following description. The scope of the invention will be pointed out in the appended claims.

### DETAILED DESCRIPTION OF THE PREFERRED EMBODIMENTS

In one embodiment of the invention, a carbodiimide according to formula (I)

R₁-N=C=N-R₂ (I)

in which R₁ and R₂ independent of one another are optionally substituted alkyl, cycloalkyl, or aryl groups and at least one of an oxazolidine are added to a bio-based polyester polyol composition. The bio-based polyester polyol is one having an acid content as reflected by its acid number that is greater than the acid number general found in petroleum based polyester polyols. In one preferred embodiment, the polyester polyol is derived from a vegetable oil such as from soybean oil. As used herein, acid number is understood to mean the number of milligrams of potassium hydroxide required to neutralize the free fatty acids contained in one (1) gram of substance.

The carbodiimide of a preferred embodiment is a sterically hindered carbodiimide according to formula (I)

R₁-N=C=N-R₂ (I)

in which R₁ and R₂ independent of one another are optionally substituted alkyl, cycloalkyl, or aryl groups. In one preferred embodiment, R₁ and R₂ are substituted aryl groups. In a preferred embodiment, R₁ and R₂ are each diisopropyl phenyl groups, thus forming 2,2',6,6'-tetraisopropyldiphenyl carbodiimide.

The oxazolidines of the preferred embodiment correspond to formula (II) 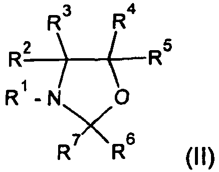 in which R₁ is hydrogen or optionally substituted straight chain or branched alkyl, and R₂ through R₇ are, independently of one another, hydrogen or optionally substituted straight chain or branched alkyl.

In a preferred embodiment the oxazolidine is 3-ethyl-2-methyl-2-(3-methylbutyl)-1-3-oxazolidine.

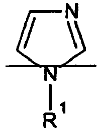

In order to reduce the acid level of the bio-based polyester containing polyol, the addition of the carbodiimide according to formula (I) and the at least one of an oxazolidine thereof to the bio-based polyol is performed with heating between 50°C to 80°C for between 2 to 6 hours. It has been found that the addition of the carbodiimide according to formula (I) and at least one of an oxazolidine and thereof may be performed at the end of the polyol reaction while the polyol product is still under heat thereby increasing the ease and efficiency of the addition. However, it should also be understood to one skilled in the art that the addition could alternatively be preformed after the polyol reaction is completed per a separate process in which the polyol is heated separately from the polyol reaction.

The carbodiimide according to formula (I) and at least one of an oxazolidine thereof may be added separately to the bio-based polyol or they may be together as part of a pre-mixture. It should be noted that carbodiimides according to formula (I) are often gel-like solids at room temperature, while oxazolidine and imidazole are generally liquids, thus, the pre-mixture of the carbodiimide and at least one of an oxazolidine thereof is performed with heating to allow all the compounds to transition to a liquid phase. A phase separation may occur upon cooling of the pre-mixture.

The preferred carbodiimide according to formula (I) is present in the mixture of carbodiimide and oxazolidine from 1 to 99 weight percent, preferably between 5 and 80 wt%, more preferably between 10 and 50 wt %.

The amount of the carbodiimide according to formula (I) and oxazolidine thereof which may be added to the polyol is between 0.1 and 10 wt %, preferably between 0.5 and 5 wt %.

The present invention further provides a process for reducing the acid number of a bio-based polyol having polyester linkages, comprising: providing a bio-based Polyester polyol and mixing the bio-based polyol with a sterically hindered carbodiimide according to formula

R₁-N=C=N-R₂ (I)

in which R₁ and R₂ independent of one another are optionally substituted alkyl, cycloalkyl, or aryl groups
and at least one of an oxazolidine.

The process Preferably comprises heating the polyol during the mixing step to between 50 and 80 degrees Celsius for between 2-6 hours.

The present invention further provides a bio-based polyol acid inhibitor comprising a composition according to claim 1.

While the present invention has been described with reference to specific details of particular embodiments above and particular examples below, it is not intended that such details be regarded as limitations upon the scope of the invention except insofar as and to the extent that they are included in the accompanying claims, and it is to be understood that various other changes and modifications may be affected therein by one skilled in the art without departing from the scope or spirit of the invention.

As used in this specification and the appended claims, the singular forms "a," "an," and "the" include plural referents unless the content clearly dictates otherwise.

### Examples:

Two blends were prepared comprising 2,2',6,6'-tetraisopropyldiphenyl carbodiimide and 3-ethyl-2-methyl-2-(3-methylbutyl)-1-3-oxazolidine, the carbodiimide being in the amount of 25 wt% and 50 wt%, Table 1 and Table 2 respectively. The blends were then each added to a soy-based polyester polyol at various amounts and the acid number and color index measured.

As shown in Tables 1 and 2, the acid number of the soy-based polyester polyols were reduced and the color index increased.

**Table 1:**

| 2,2',6,6'-tetraisopropyldiphenyl carbodiimide and 3-ethyl-2-methyl-2-(3-methylbutyl)-1-3-oxazolidine (25 wt% Carbodiimide) | | |
|---|---|---|
| % Added | Acid Number | Color Index |
| 0 | 9.4 | 2 |
| 0.3 | 8.8 | 7 |
| 0.5 | 7.9 | 7 |
| 0.8 | 7.4 | 8 |
| 1.0 | 6.8 | 8 |
| 1.6 | 5.9 | 8 |

**Table 2:**

| 2,2',6,6'-tetraisopropyldiphenyl carbodiimide and 3-ethyl-2-methyl-2-(3-methylbutyl)-1-3-oxazolidine (50 wt% Carbodiimide) | | |
|---|---|---|
| % Added | Acid Number | Color Index |
| 0 | 9.4 | 2 |
| 0.3 | 8.6 | 6 |
| 0.5 | 8.0 | 7 |
| 0.8 | 7.4 | 7 |
| 1.0 | 6.6 | 8 |
| 1.6 | 5.7 | 8 |

## Claims

1. A bio-based polyol composition having ester linkages formed by mixing a polyester bio-based polyol with a sterically hindered carbodiimide according to formula
R₁-N=C=N-R₂ (I)
in which R₁ and R₂ independent of one another are optionally substituted alkyl, cycloalkyl, or aryl groups
and at least one of an oxazolidine.

2. The bio-based polyol composition according to Claim 1, wherein the polyester bio-based polyol is formed from soybean oil or castor oil.

3. The bio-based polyol composition according to Claim 1, wherein the carbodiimide is 2,2',6,6'-tetraisopropyldiphenyl carbodiimide.

4. The bio-based polyol composition according to Claim 1, wherein the oxazolidine is 3-ethyl-2-methyl-2-(3-methylbutyl)-1-3-oxazolidine.

5. A process for reducing the acid number of a bio-based polyol having polyester linkages, comprising: providing a bio-based polyester polyol and mixing the bio-based polyol with a sterically hindered carbodiimide according to formula
R₁-N=C=N-R₂ (I)
in which R₁ and R₂ independent of one another are optionally substituted alkyl, cycloalkyl, or aryl groups
and at least one of an oxazolidine.

6. The process according to Claim 5, further comprising heating the polyol during the mixing step to between 50 and 80 degrees Celsius for between 2-6 hours.

7. A bio-based polyol acid inhibitor comprising a composition according to claim 1.

## Patentansprüche

1. Biopolyolzusammensetzung mit Esterbindungen, gebildet durch Mischen eines Polyesterbiopolyols mit einem sterisch gehinderten Carbodiimid der Formel
R₁-N=C=N-R₂ (I)
worin R₁ und R₂ unabhängig voneinander für gegebenenfalls substituierte Alkyl-, Cycloalkyl-oder Arylgruppen stehen,
und einem Oxazolidin.

2. Biopolyolzusammensetzung nach Anspruch 1, wobei das biobasierte Polyesterbiopolyol aus Sojaöl oder Rizinusöl gebildet wird.

3. Biopolyolzusammensetzung nach Anspruch 1, wobei es sich bei dem Carbodiimid um 2,2',6,6'-Tetraisopropyldiphenylcarbodiimid handelt.

4. Biopolyolzusammensetzung nach Anspruch 1, wobei es sich bei dem Oxazolidin um 3-Ethyl-2-methyl-2-(3-methylbutyl)-1,3-oxazolidin handelt.

5. Verfahren zur Verringerung der Säurezahl eines Biopolyols mit Polyesterbindungen, bei dem man ein Biopolyesterpolyol bereitstellt und das Biopolyol mit einem sterisch gehinderten Carbodiimid der Formel
R₁-N=C=N-R₂ (I)
worin R₁ und R₂ unabhängig voneinander für gegebenenfalls substituierte Alkyl-, Cycloalkyl-oder Arylgruppen stehen,
und einem Oxazolidin mischt.

6. Verfahren nach Anspruch 5, bei dem man ferner das Polyol während des Mischens 2-6 Stunden auf eine Temperatur zwischen 50 und 80 Grad Celsius erhitzt.

7. Biopolyol-Säureinhibitor, umfassend eine Zusammensetzung nach Anspruch 1.

## Revendications

1. Composition de polyol bio ayant des liaisons esters formée par le mélange d'un polyester polyol bio avec un carbodiimide stériquement encombré selon la formule
R₁-N=C=N-R₂ (I)
dans laquelle R₁ et R₂, indépendamment l'un de l'autre, sont des groupements alkyle, cycloalkyle ou aryle éventuellement substitués,
et une oxazolidine.

2. Composition de polyol bio selon la revendication 1, **caractérisée en ce que** le polyester polyol bio est formé à partir de l'huile de soja ou de l'huile de ricin.

3. Composition de polyol bio selon la revendication 1, **caractérisée en ce que** le carbodiimide est le 2,2',6,6'-tétraisopropyldiphényl carbodiimide.

4. Composition de polyol bio selon la revendication 1, **caractérisée en ce que** l'oxazolidine est la 3-éthyl-2-méthyl-2-(3-méthylbutyl)-1-3-oxazolidine.

5. Procédé de réduction de l'indice d'acidité d'un polyol bio ayant des liaisons polyesters, comprenant : l'obtention d'un polyester polyol bio et le mélange du polyol bio avec un carbodiimide stériquement encombré selon la formule
R₁-N=C=N-R₂ (I)
dans laquelle R₁ et R₂, indépendamment l'un de l'autre, sont des groupements alkyle, cycloalkyle ou aryle éventuellement substitués,
et une oxazolidine.

6. Procédé selon la revendication 5, comprenant en outre le chauffage du polyol pendant l'étape de mélange jusqu'à entre 50 et 80 degrés Celsius pendant entre 2 et 6 heures.

7. Inhibiteur d'acide de polyol bio comprenant une composition selon la revendication 1.
